# EUROPEAN PATENT APPLICATION

(11) **EP 3 840 146 A1**
(43) Date of publication of application: **23.06.2021**
(21) Application number: 19216629.6
(22) Date of filing: 16.12.2019
(51) Int. Cl.: H02B 11/167, H02B 11/127

(54) **CART FOR AN AIR-INSULATED SWITCHGEAR AND AIR-INSULATED SWITCHGEAR COMPRISING SUCH CART**

(71) Applicant: Siemens Aktiengesellschaft, 80333 München (DE)
(72) Inventor: KARADENIZ, Tahsin, 41400 Gebze-Kocaeli (TR); OTUNC, Hasim, 34912 Pendik, Istanbul (TR); KOSE, Can, 34854 Maltepe/Istanbul (TR)

(57) **Abstract**

The cart (10) comprises a base (12) carried by a plurality of wheels (14) and a cargo-bay (13) for holding a switchgear device (9). According to the present invention, the cargo-bay (13) is movably connected to the base (12) of the cart (10).

The air-insulated switch cabinet (1) of the invention comprises a switchgear device (9) releasably connected or connectable to a plurality of electrical contacts of the air-insulated switch cabinet (1) and a cart (10) as described above for carrying the switchgear device (9).

## Description

### Field of the Invention

The present invention relates to a cart for an air-insulated switch cabinet and an air-insulated switch cabinet comprising the same

### Technical Background

Air-insulated switchgear serve for distributing and switching electricity in the range of thousand(s) to tens of thousands of volts. There is a trend towards increasing voltages in this field of technology as higher voltages allow for distribution of greater amounts of electrical power while keeping conductor diameters constant. However, as voltage levels increase, so do the required minimum insulation distances between the conductors or between each conductor and ground. Since switch cabinets typically have standardized dimensions, the increasing insulation distances pose some challenges.

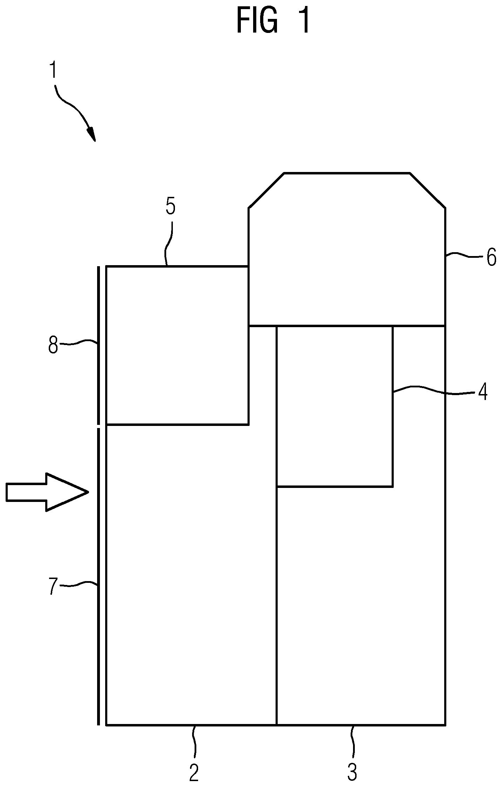

Fig. 1 shows a typical air-insulated switch cabinet 1 in a cross-sectional sideview. The switch cabinet 1 generally comprises four different sections which are separated from each other. A busbar compartment 4 houses a set of busbars for distributing electrical power through a plurality of switch cabinets arranged next to each other. The respective busbar compartments of the switch cabinets may be directly connected with each other and thus form one common busbar compartment, or they may be separate from each other. In the latter case electrical feedthroughs may be used to pass the busbars through the separate busbar compartments.

The busbars located in the busbar compartment 4 are contacted by first ends of an air-insulated switchgear device located in a switch device compartment 2. The switchgear device will commonly be a circuit-breaker but may also be an arc-quenching device, a fast-earthing switch, a set of fuses, a transformer or the like. Second ends of the switchgear device contact cables located in a connection compartment 3. The cables serve as either input or output lines for the electrical power distributed by the installation. The contacts between the switchgear device and the busbars and the cables, respectively, are provided by means of insertion tulips or finger contacts which form releasable electrical contacts.

A low-voltage compartment 5 houses control electronics, measurement devices and other auxiliary components. The switch device compartment 2 and the low-voltage compartment 5 may be accessed by maintenance personnel through respective compartments doors 7 and 8. The compartments 2, 3 and 4 are connected to a pressure-relief duct 6 which may receive hot gases emitted at high pressure in case of a malfunction such as arc-generation. The pressure-relief duct 6 channels away the hot gases and releases them in a controlled place and manner to thereby protect any personnel positioned in front of the switch cabinet 1.

One advantage of air-insulated switchgear over gas-insulated switchgear is the ease of maintenance. In particular, the switchgear device located in the switch device compartment 2 may be removed from its operation position, extracted from the cabinet 1 and either be replaced or repaired. Since switchgear devices are heavy, their extraction is facilitated by means of a cart upon which the switchgear device is arranged.

In view of the aforementioned, it is an object of the present invention to provide an improved cart for an air-insulated switch cabinet that may be operated securely.

### Summary of the Invention

The above object is achieved by a first aspect of the present invention that provides a cart for an air-insulated switch cabinet that comprises a base carried by a plurality of wheels and a cargo-bay for holding a switchgear device. According to the present invention, the cargo-bay is movably connected to the base of the cart.

The present invention is based on the insight that the base of the cart can be made longer and thus provide more stability while carrying a top-heavy load if the cargo-bay of the cart is movably connected to the base of the cart. This becomes more important with the aforementioned trend towards increasing voltages which require larger minimum insulation distances of cables and busbars. The larger minimum insulation distances entail deeper connection and busbar compartments which reduce the available depth for the switch device compartment within which the cart will be placed.

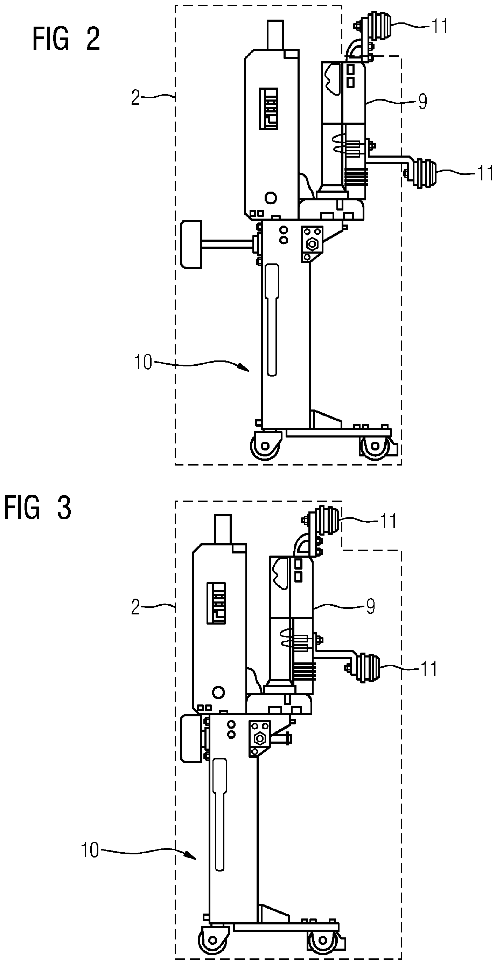

Figs. 2 and 3 show sideviews of a cart 10 as known from the prior art. Dashed outlines 2 indicate the dimensions of the corresponding switch device compartment 2 of an air-insulated switch cabinet as shown in Fig. 1. The cart 10 carries a switchgear device 9 with insertion tulips 11 for contacting corresponding busbar contacts in the busbar compartment 4 and cable contacts in the connection compartment 3, respectively.

Fig. 2 shows the cart 10 in an operating position in which the switchgear device 9 is operably connected to the contacts. In this position the cart 10 carrying the switchgear device 9 is located at the back of the switch device compartment 2 when seen from the position of a maintenance person accessing the switch device compartment 2 through its door. The front wheels of the cart 10 touch or are in proximity to the rear wall of the switch device compartment 2. The maintenance person may extract the switchgear device 9 by moving the cart 10 along guiderails coupled to corresponding ports of the switch cabinet. For example, a thread rod and crank mechanism may be used to slowly extract the cart 10 and thus the switchgear device 9 from its operating position thereby interrupting the electrical contacts.

Fig. 3 shows the cart 10 and switchgear device 9 in a maintenance position within the switch device compartment 2. The maintenance person may now release the guiderails from the corresponding ports of the switch cabinet and then freely move the cart 10 with the switchgear device 9 borne by the cart 10. In this way the switchgear device 9 may be removed entirely from the switch device compartment 2 for repair, testing or replacement.

The inventors of the invention described herein realized upon making the invention that the cart according to the prior art changing between the operating position and the maintenance position with the confined space of the switch device compartment 2 may only have a limited wheelbase. The limited wheelbase makes the cart carrying the heavy switchgear device susceptible for tipping over which represents a danger to the person operating the cart as well as to the switchgear device. The inventors also realized that with decreasing depth of the switch device compartment 2, the wheelbase of the prior art cart will become unacceptably short.

The cart of the first aspect of the present invention overcomes this problem by connecting the cargo-bay to the base of the cart in a way that allows for movement of the cargo-bay relative to the base of the cart. Thus, the base of the cart can cover the entire ground area available in the switch device compartment of the switch cabinet resulting in a maximum wheelbase while the switch device may be hauled from its operating position to its maintenance position and vice versa without necessitating movement of the cart base within the switch device compartment.

Preferably the cargo-bay is horizontally movable relative to the base. This enables movement of the cargo-bay and switchgear device arranged thereon without having to overcome gravitational forces. In particular, the cargo-bay may not be movable relative to the base in a non-horizontal direction.

The cargo-bay may be movable relative to the base along a predefined main direction of motion of the cart. In particular, the cargo-bay may not be movable in a direction traversing the predefined main direction of motion of the cart. The predefined main direction of motion of the cart may be a rolling direction defined by the wheels of the cart and/or by a position of an optional handle for maneuvering the cart. In particular, the predefined main direction of motion of the cart may be along a direction connecting the operating position and the maintenance position of the cart or switchgear device.

Preferably the cargo-bay and the base are movably connected by a slider mechanism. The slider mechanism eases movement of the cargo-bay and switchgear device between the operating and maintenance positions.

For example, the slider mechanism may comprise at least one rail connected to a first one of the base or the cargo-bay and at least one roller connected to a remaining one of the base or the cargo-bay, wherein the at least one roller is interlocked with the at least one rail. The roller may roll on the rail minimizing friction between the cargo-bay and the base of the cart. In preferred embodiments of the present invention, the slider mechanism may comprise at least two rails and rollers arranged at opposing sides of the base of the cart.

The slider mechanism may further comprise corresponding wheel stoppers for each rail of the slider mechanism. The wheel stoppers ensure that the rollers do not accidentally leave the rails thereby detaching the cargo-bay from the base of the cart.

Generally, a wide variety of known slider mechanisms may be used for the cart of the present invention. For example, the slider mechanism may use one or more rails arranged at the bottom side of the cargo-bay, each including one or more rollers affixed to the corresponding rail, and one or more rails arranged on the top of the base of the cart, also including one or more rollers affixed to the corresponding rail. The rollers of each rail may interlock with the corresponding rail arranged at the other one of the cargo-bay or the base of the cart.

Preferably the cart further includes a locking brake adapted to fix the cargo-bay relative to the base when locked and to allow movement of the cargo-bay relative to the base when unlocked. The locking brake may be used to prevent movement of the cargo-bay relative to the base of the cart while using the cart for transporting the switchgear device outside of the switch device compartment of the switch cabinet.

The cart may further comprise at least one guiderail having a first end connected to the base of the cart and a second end releasably connectable to a corresponding connector or connection port of an air-insulated switch cabinet.

The cart may further comprise a rack or a thread rod adapted to define a position of the cargo-bay relative to the base of the cart.

The guiderail and/or the rack or thread rod may be used in combination with the locking brake in a particularly advantageous manner. For example, the locking brake may clamp on the guiderail and/or rack or thread rod when locked and may release the guiderail and/or rack or thread rod when unlocked.

A second aspect of the invention provides an air-insulated switch cabinet comprising a switchgear device releasably connected or connectable to a plurality of electrical contacts of the air-insulated switch cabinet and a cart for carrying the switchgear device according to the first aspect of the present invention.

### Brief Description of the Drawings

The present invention will be illustrated in more detail referring to drawings in which:
Fig. 1 shows an air-insulated switch cabinet according to the art which, however, may also be used for the present invention;
Fig. 2 shows a cart for an air-insulated switch cabinet according to the prior art and positioned in an operating position;
Fig. 3 shows the cart of Fig. 2 positioned in a maintenance position;
Fig. 4 shows a cart according to the present invention and positioned in an operating position;
Fig. 5 shows the cart of Fig. 4 positioned in a maintenance position; and
Fig. 6 shows an exemplary slider mechanism for movably connecting the cargo-bay and the base of the cart according to the present invention.

### Detailed Description of the Drawings

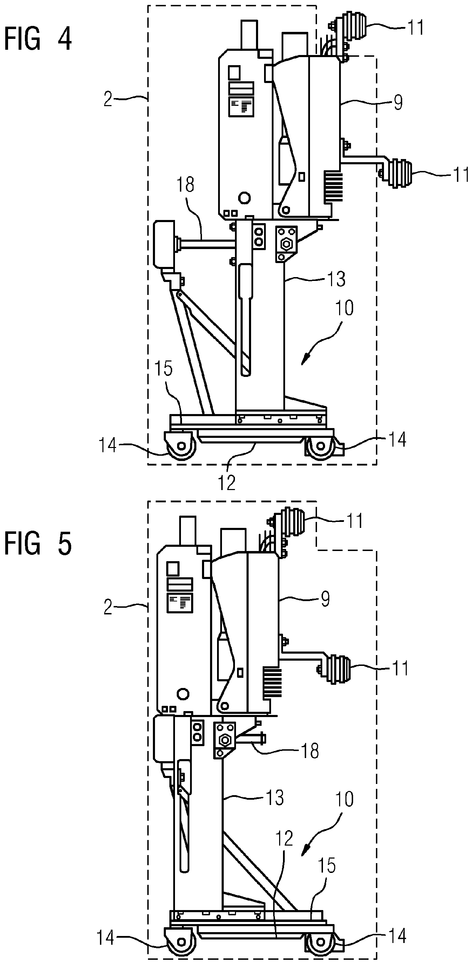

Fig. 4 shows a cart 10 according to the present invention positioned in an operating position. As with Figs. 2 and 3 a dashed outline indicates the approximate dimensions of the switch device compartment 2 of the switch cabinet 1. As can be seen from the illustration, wheels 14 define a wheelbase which is as long as the switch device compartment 2 allows. The wheels 14 carry a base 12 upon which a cargo-bay 13 is movably arranged. It should be understood that the term "wheel" as used herein may also refer to rollers, crawler-tracks or similar means of vehicle propulsion used in carts.

The cargo-bay 13 carries a switchgear device 9 which in the shown example is a circuit-breaker having insertion tulips 11. However, the cargo-bay 13 could just as well carry any other air-insulated switchgear device capable of being inserted into and extracted from a switch cabinet.

The cargo-bay 13 is movably connected to the base 12 by means of a slider mechanism including a rail 15, however, other means of movable connection may be devised without departing from the invention as defined in the patent claims. The exemplary embodiment of the inventive cart of Fig. 4 comprises optional guiderails 18 which serve to guide the cargo-bay 13 and the switchgear device 9 placed thereon during insertion and extraction. The guiderail(s) 18 may be affixed to the base 12 which ensures secure motion of the cargo-bay 13 relative to the base 12. During insertion and extraction of the switchgear device 9, the end of the guiderail(s) 18 pointing inside the switch cabinet may be coupled to a corresponding connector or connection port of the switch cabinet. This ensures proper alignment of the cart, the switchgear device 9 with its contacts 11 and the corresponding contacts inside the switch cabinet.

Fig. 5 shows the cart 10 of Fig. 4 positioned in a maintenance position. In the maintenance position, the switchgear device 9 is disconnected from the switch cabinet and may be removed from the switch cabinet when the guiderail(s) 18 have been disconnected from the switch cabinet. Similarly, the switchgear device 9 may be hauled to the switch cabinet using the cart 10 of the invention, the cart may be put into the maintenance position shown in Fig. 5, the guiderails may be connected to the switch cabinet and the switchgear device 9 may be inserted into the switch cabinet by putting the cart 10 into the operating position shown in Fig. 4.

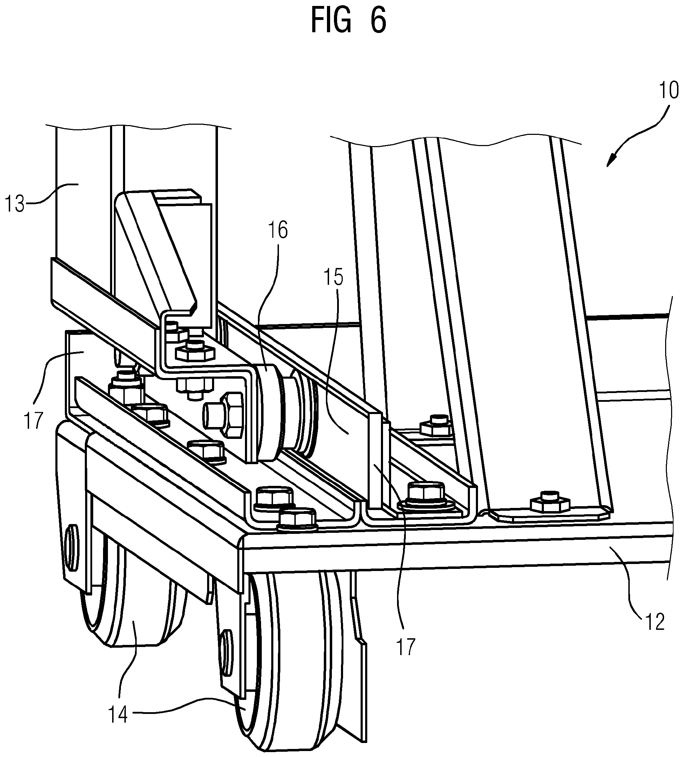

Fig. 6 shows an exemplary slider mechanism for movably connecting the cargo-bay 13 and the base 12 of the cart 10 according to the present invention. The slider mechanism shown includes a rail 15 arranged at one side of the base 12 of the cart 10. A second rail may be arranged in parallel to the rail 15 at the side opposite to the one shown in Fig. 6. A roller 16 arranged on the cargo-bay 13 interlocks with the rail 15 and may roll back and forth thereon. Movement of the roller 16 is confined by wheel stoppers 17 arranged at opposing ends of the rail 15. In this way the cargo-bay 13 may only be moved relative to the base 12 over a distance equivalent to the distance between the operating position and the maintenance position of the cart 10 and the switchgear device 9.

The exemplary slider mechanism shown in Fig. 6 may be modified in many ways that will be apparent to the person skilled in the art. For example, the rail 15 may be fixed to the cargo-bay 13 and the roller 16 may be fixed to the base 12 of the cart 10. Furthermore, respective rails and rollers may be present on both the cargo-bay 13 and the base 12. In this case the respective rollers may be positioned at opposing ends of the cargo-bay 13 and the base 12 in such a way that the rollers will be close to each other when the cart 10 is in the operating position and far from each other when the cart 10 is in the maintenance position. Furthermore, more than one roller may be fixed to the same rail in order to distribute the weight carried by the rollers.

The present invention has been described referring to illustrations of exemplary embodiments of the invention. The examples given are not intended to limit the scope of the invention as defined by the subsequent claims but to show preferred ways of carrying out the invention.

### Reference Numerals

- 1: air-insulated switch cabinet
- 2: switch device compartment
- 3: connection compartment
- 4: busbar compartment
- 5: low-voltage compartment
- 6: pressure-relief duct
- 7: door
- 8: door
- 9: switchgear device
- 10: cart
- 11: insertion tulip
- 12: base
- 13: cargo-bay
- 14: wheel
- 15: rail
- 16: roller
- 17: wheel stopper
- 18: guiderail

## Claims

1. A cart (10) for an air-insulated switch cabinet (1), the cart (10) comprising a base (12) carried by a plurality of wheels (14) and a cargo-bay (13) for holding a switchgear device (9), **characterized in that** the cargo-bay (13) is movably connected to the base (12).

2. The cart (10) of the preceding claim, wherein the cargo-bay (13) is horizontally movable relative to the base (12).

3. The cart (10) of one of the preceding claims, wherein the cargo-bay (13) is movable relative to the base (12) along a predefined main direction of motion of the cart (10).

4. The cart (10) of one of the preceding claims, wherein the cargo-bay (13) and the base (12) are movably connected by a slider mechanism (15, 16, 17).

5. The cart (10) of the preceding claim, wherein the slider mechanism (15, 16, 17) comprises at least one rail (15) connected to a first one of the base (12) or the cargo-bay (13) and at least one roller (16) connected to a remaining one of the base (12) or the cargo-bay (13), wherein the at least one roller (16) is interlocked with the at least one rail (15).

6. The cart (10) of the preceding claim, wherein the slider mechanism (15, 16, 17) further comprises corresponding wheel stoppers (17) for each rail (15) of the slider mechanism (15, 16, 17).

7. The cart (10) of one of the preceding claims, further including a locking brake adapted to fix the cargo-bay (13) relative to the base (12) when locked and to allow movement of the cargo-bay (13) relative to the base (12) when unlocked.

8. The cart (10) of one of the preceding claims, further comprising at least one guiderail (18) having a first end connected to the base (12) of the cart (10) and a second end releasably connectable to a corresponding connector or connection port of an air-insulated switch cabinet (1).

9. The cart (10) of one of the preceding claims, further comprising a rack or a thread rod adapted to define a position of the cargo-bay (13) relative to the base (12).

10. An air-insulated switch cabinet (1) comprising a switchgear device (9) releasably connected or connectable to a plurality of electrical contacts of the air-insulated switch cabinet (1) and a cart (10) according to one of the preceding claims for carrying the switchgear device (9).
